# EUROPÄISCHE PATENTSCHRIFT

(11) **EP 0 494 319 B1**
(45) Veröffentlichungstag und Bekanntmachung des Hinweises auf die Patenterteilung: **13.03.1996**
(21) Anmeldenummer: 90123583.8
(22) Anmeldetag: 07.12.1990
(51) Int. Cl.: A01G 23/087, A01G 23/095

(54) **Entaster**
Delimber
Ebrancheur

(43) Veröffentlichungstag der Anmeldung: 15.07.1992
(73) Patentinhaber: DOLL FAHRZEUGBAU GMBH, D-77728 Oppenau (DE)
(72) Erfinder:
(74) Vertreter: Hansmann, Axel, Dipl.-Wirtsch.-Ing.

(56) Entgegenhaltungen:
- CA-A- 859 489
- CH-A- 481 561
- DE-A- 3 524 570
- FR-A- 2 560 493
- GB-A- 1 423 546

## Beschreibung

Die Erfindung betrifft ein Aggregat zum ferngesteuerten Ergreifen, Absägen und in dieser Lage Festhalten von Ästen und Stammteilen. Eine solche Arbeitsmaschine wird kurz "selbstfahrender Entaster" genannt, wenn sie sich auf einem selbstfahrenden Fahrgestell, z.B. einem LKW-Fahrgestell ODER ANGETRIEBENEM SCHIENENFAHRGESTELL statt auf einem Anhänger, Sattelauflieger oder Bahnwaggon befindet, obwohl hiermit selbstverständlich auch ganze Bäume erfaßt und knapp über dem Boden abgesägt werden können, sofern diese die Dimensionierung der Arbeitsmaschine nicht übersteigen.

Bisher besteht das Problem, daß bei Entastungsarbeiten oder Fällarbeiten an Alleebäumen oder anderen Bäumen an stark frequentierten Orten ein Arbeiter mit einer handgeführten Säge in einem Lastkorb, der sich am Ende des Auslegers eines Kranes befindet, an die Schnittstelle gehoben wird und dort arbeitet oder direkt als Steiger den Stamm erklimmt und die Spitze kappt. Die abgeschnittenen Äste oder Stammteile fallen dann jedoch unkontrollierbar herab.

Für Fällungsarbeiten in Forstgebieten ist es bekannt, sogenannte Fällgreifer zu verwenden, die im wesentlichen aus einer zweiteiligen Klaue bestehen sowie einer parallel dazu im Abstand angeordneten Kappsäge, meist einer schwertförmigen Kettensäge. Diese Arbeitseinheit, befindet sich üblicherweise am freien Ende eines knickbaren, jedoch nicht teleskopierbaren Auslegers eines Hydraulikkranes und hängt von dessen freien Ende, verbunden über ein oder zwei Kardangelenke, herab.

Aus DE-A-3524570 ist ein selbstfahrenden Entaster bekannt, bei dem die Arbeitseinheit an einem teleskopierbaren Ausleger mit polygonem Querschnitt angeordnet ist, welcher an einem vom Chassis getragenen Kran befestigt ist, sodaß Drehmomente vom Chassis auf den Klauengreifer der Arbeitseinheit übertragen werden können. Der Kran läßt sich jedoch nur begrenzt und nur um die vertikale Achse verschwenken.

Um einen möglichst großen Arbeitsbereich der Arbeitseinheit zu erreichen, also beispielsweise auch Punkte zu erreichen, die tiefer liegen als der Untergrund unter dem Chassis, ist der Ausleger gegenüber der Kransäule aus seiner hierzu rechtwinkligen Lage nicht nur um annähernd 90° nach oben, sondern auch um etwa 10 bis 15° nach unten verschwenkbar.

Um einen von der gesamten Bauhöhe her möglichst niedrigen und damit gut einsetzbaren Entaster zu erhalten, ist die Kransäule sehr niedrig gehalten und besitzt einen großen Durchmesser, vor allem an der Basis, um eine gute Kraftübertragung zu gewährleisten.

Dabei sollte das Fahrerhaus des LKW ebenfalls niedrig gestaltet sein und mit seiner Oberkante unterhalb der oberen Stirnseite der Kransäule enden, um bei einer aus der Waagrechten schräg nach unten verschwenkten Position des Auslegers ein Herabreichen der Arbeitseinheit an Punkten schräg vor dem Fahrerhaus zu ermöglichen.

Um das Arbeiten an Böschungen zu erleichtern, ist die Kransäule selbst gegenüber dem Chassis nicht nur um eine senkrechte Achse voll drehbar, sondern auch um eine waagerechte Achse um einen begrenzten Winkelbetrag kippbar. Zusammen mit der Schwenkbarkeit des Auslegers gegenüber der Kransäule ergibt dies einen Arbeitsraum, der sich vom Untergrund der Arbeitsmaschine aus nicht nur halbkugelförmig nach oben erstreckt, sondern darüber hinaus nach unten bis zu einer Schräge von etwa 60° unterhalb der Waagerechten.

Die geforderte Übertragung von Biegemomenten und Drehmomenten wird konkret dadurch gelöst, daß sich zwischen dem Chassis und dem Unterteil der Kransäule ein an sich bekannter, möglichst groß dimensionierter Zahndrehkranz entsprechend dem Basisdurchmesser der Kransäule, befindet. Gegenüber diesem Unterteil ist das Oberteil der Kransäule um eine waagerechte Kippachse kippbar, wobei die hierfür notwendigen Kräfte mittels der bekannten Hydraulikzylinder aufgebracht werden.

Mit Hilfe ähnlicher, entsprechend in der Dimensionierung angepaßter, Hydraulikzylinder ist ein Verschwenken des Auslegers aus der rechtwinkligen Ruhelage gegenüber der Drehachse der Kransäule möglich, wobei deren Schwenkbereich aus der Ruhelage etwa annähernd 90° nach oben und etwa 15° nach unten beträgt. Die Abweichung nach unten genügt, um unmittelbar über die Oberkante des Fahrerhauses hinweggreifen zu können.

Die Kraftübertragung vom Ausleger, also dem freien Ende dessen vordersten Segmentes, auf die Arbeitseinheit geschieht durch das Befestigen eines Zwischenstückes an der vorderen Stirnfläche am freien Ende des Auslegers, welches ebenfalls mittels Hydraulikzylinder um eine quer zur Längsachse des Auslegers liegende Schwenkachse verschwenkt werden kann. Die Schwenkachse liegt dabei waagerecht, um die in der Ruhelage senkrecht hängenden Klauen der Arbeitseinheit in eine waagerechte Lage bringen zu können.

Gegenüber diesem Zwischenstück ist die Arbeitseinheit mittels eines üblichen Zahndrehkranzes, dessen Symmetrieachse wiederum quer zur Schwenkachse und damit in der Ruhestellung parallel zur Längsachse des Auslegers liegt, frei drehbar. Um das gesamte Aggregat möglichst klein zu halten, ist der Durchmesser dieses Zahndrehkranzes in etwa auf die Quererstreckung des Auslegers beschränkt. Dies ergibt insgesamt dennoch eine Übertragungsmöglichkeit für ein Drehmoment von etwa 2 mt, während das übertragbare Biegemoment von der Dimensionierung der Segmente des Auslegers abhängt.

Bei einem dreiteiligen Ausleger, dessen Gesamtlänge im zusammengeschobenen Zustand weniger als 4,50 m lang ist und einer gesamten Aufbauhöhe auf dem Chassis im Ruhezustand, also bei waagerecht liegendem Ausleger, von weniger als 2 m ergibt sich dadurch ein Aktionsradius des Entasters bis annähernd 18 m Höhe und etwa 15 m im Umkreis, wobei vom Ausleger vor dem Fahrerhaus und hinter dem Hinterende des LKW liegende Bereiche bis zu einer Neigung von etwa 15° unterhalb der Waagerechten angefahren werden können, während Böschungen neben dem LKW bis zu einer Neigung von 60° unterhalb der Waagerechten von der Arbeitseinheit angefahren werden können. Zusammen mit einem niedrig gebauten, vorzugsweise allradgelenkten Chassis ergibt sich damit eine Zugänglichkeit vor allem im städtischen Bereich, die kaum Wünsche offenläßt.

Zusätzlich wird ein derartiger Entaster vorzugsweise einen Hacker mit sich führen, um die gekappten Holzteile direkt vor Ort in Holzschnitzel zu verarbeiten, was den Abtransport zusätzlich erleichtert. Ein derartiger Hacker kann auf dem Heck des selbstfahrenden Entasters transportiert und vor Beginn der Arbeiten von dort mittels des Klauengreifers der Arbeitseinheit an einem günstigen Punkt der Umgebung abgestellt werden, sofern der Hacker hierfür eine entsprechende Ansatzmöglichkeit, beispielsweise eine fest montierte, gut greifbare Querstrebe, für den Klauengreifer aufweist. Weiterhin muß der Hacker für den Transport auf dem Chassis, an dessen Formgebung, Dimensionierung und Befestigungsmöglichkeiten entsprechend angepaßt sein, was von der Wahl des verwendeten Chassis abhängt.

Die Arbeitseinheit wird dabei vorzugsweise hydraulisch mit Arbeitsenergie versorgt und elektrisch angesteuert. Ein elektrisch angesteuerter, mehrfacher Proportional-Hydraulik-Ventilblock ist dabei am vorderen Ende des Auslegers, also an der Arbeitseinheit 8 oder etwa dem Zwischenstück 10, angeordnet. Dies hat den Vorteil, daß zu diesem Ventilblock von der Hydraulikpumpe, die üblicherweise an einer günstigen Stelle des Chassis angeordnet ist, lediglich eine Vorlauf- und eine Rücklaufleitung entlang des Auslegers zu dem am freien Ende angeordneten Ventilblock gezogen werden muß, während bei den bisherigen Arbeitseinheiten für die einzelnen Funktionen jeweils eine separate Vorlauf- und Rücklaufleitung entlang des Auslegers gezogen werden mußte. Diese Lösung senkt das Gewicht und die Störanfälligkeit da bei nur zwei Leitungen die Beschädigungsgefahr geringer ist als bei einer Vielzahl von Leitungen.

Diese Vor- und Rücklaufleitungen für das Hydraulikmedium werden bei Längenveränderung des Auslegers über eine federbelastete, lose Rückzugsrolle durch automatisches Auf- und Abwickeln in ihrer Länge angepaßt.

Um eine separate Hydraulikpumpe für die Arbeitseinheit einzusparen, kann die Energieversorgung für die Arbeits einheit an eine eventuell vorhandene Hydraulik des Fahrgestells angeschlossen und dort mittels Umschalter zu- oder abgeschaltet werden.

Von derselben Kabine, von der aus die Arbeitseinheit im Arbeitseinsatz gesteuert wird, ist bei einem selbst fahrenden Entaster auf einem LKW-Chassis auch ein Verfahren des LKW sowie ein Betätigen der Stützen des LKW möglich.

Zusätzlich ist es möglich, im Chassis des LKW Lagesensoren anzuordnen, die ab einer gewissen Schräglage des Fahr gestells, bei der Kippgefahr für das Fahrgestell besteht, ein Öffnen des Greifers der Arbeitseinheit bewirken, um das Kippen des Fahrgestells zu vermeiden. Eine solche Schaltung ist selbstverständlich nur dann vorzunehmen, wenn ausreichende Sicherheitsmaßnahmen wie weiträumige Absperrung etc. möglich und durchgeführt worden sind.

Eine Ausführungsform gemäß der Erfindung ist im folgenden beispielhaft näher beschrieben. Es zeigen
Fig. 1 eine Seitendarstellung des gesamten Entasters,
Fig. 2 eine Detailansicht der am freien Ende des Auslegers befestigten Arbeitseinheit,
Fig. 3 eine Ansicht gemäß Fig. 2 in Querrichtung.
Fig. 4 einen Schnitt durch die Arbeitseinheit 8 senkrecht zu deren Längsachse 43 und
Fig. 5 eine Prinzipdarstellung des durch die Arbeitseinheit 8 erreichbaren Arbeitsraumes des Entasters.

In den Figuren ist die Hydraulikversorgung der Arbeitseinheit sowie der Ventilblock und dessen elektrische Steuerleitungen am vorderen Ende des Auslegers aus Vereinfachungsgründen nicht eingezeichnet.

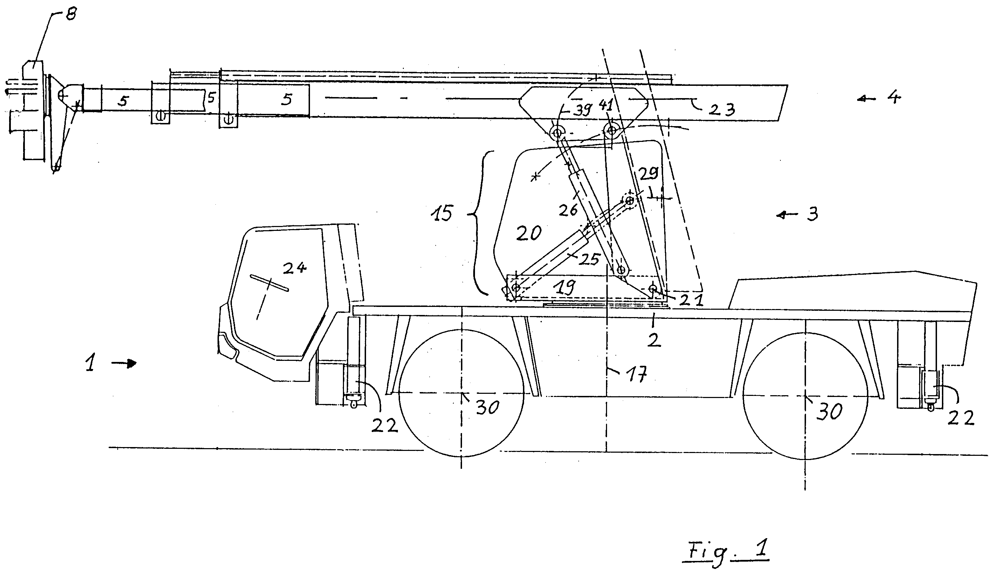

Fig. 1 zeigt in der Seitenansicht den Entaster, jedoch ohne Arbeitseinheit am Ausleger des Kranes.

Es ist das LKW-Fahrgestell 1 zu erkennen, dessen Chassis 2 mittels der hydraulischen Chassis-Stützen 22 am Untergrund fest abgestützt werden kann. Ungefähr in der Mitte des Chassis 2, also zwischen den Achsen 30, ist die Kransäule 15 aufgebaut. Das Unterteil 19 der Kransäule 15 ist dabei mittels des Zahndrehkranzes 18 um eine senkrechte Achse 17 gegenüber dem Chassis 2 drehbar befestigt. Auf dem Unterteil 19 ist das Oberteil 20 der Kransäule 15 aufgebaut und gegenüber diesem um die waagerechte Kippachse 21, die quer zum Fahrzeug am hinteren Ende der Kransäule verläuft, kippbar befestigt. Mittels eines Hydraulikzylinders 25, der einerseits am Unterteil 19 in der Nähe dessen Vorderkante und andererseits am Oberteil 20 angelenkt ist, wird die Kippbewegung des Oberteils 20 gegenüber dem Unterteil 19 bewirkt. Der obere Anlenkpunkt des Hydraulikzylinders 25 am Oberteil 20 bewegt sich damit entlang der Bogenlinie 29, deren Mittelpunkt die Kippachse 21 ist.

In gleicher Weise funktioniert das Verschwenken des Auslegers 4 gegenüber dem Oberteil 20 der Kransäule 15.

Der Ausleger 4 liegt im Ruhezustand etwa waagerecht über der oberen Stirnseite 16 der Kransäule 15 und ragt mehrheitlich vorne, jedoch auch hinten über die Kransäule hinaus.

Ein zweiter Hydraulikzylinder 26 ist mit seinem einen Ende im unteren, hinteren Bereich am Oberteil 20 der Kransäule 15 angelenkt, und mit seinem anderen Ende an einem im Ruhezustand weiter vorne liegenden Punkt des Auslegers 4.

Durch Ausfahren oder Einfahren des Kolbens des Hydraulikzylinders 26 bewegt sich der Anlenkpunkt des Hydraulikzylinders 26 am Ausleger 4 auf einer Bogenlinie 39, deren Zentrum die etwa waagerechte Kippachse 41 ist, die sich bei Kippen des Oberteils 20 auf einer zur Bogenlinie 29 konzentrischen Bogenlinie bewegt.

Die nicht durchgezogene Linie zeigt den Ausleger 4 in seiner gegenüber dem Oberteil 20 der Kransäule vollständig aufgerichteten Lage.

Am linken Endes des Auslegers 4 sind ferner die drei Segmente 5 des Auslegers 4 zu unterscheiden, die jeweils aus ineinanderpassenden Vierkantrohren bestehen und teleskopartig ausgefahren werden können.

In Fig. 1 ist ferner zu erkennen, daß das Fahrerhaus 24 sehr niedrig ausgebildet ist, so daß seine Oberkante unterhalb der oberen Stirnseite 16 der Kransäule 15 endet. Dadurch kann der entlang der Längsachse des Fahrzeuges ausgerichtete Ausleger von der Waagerechten aus auch nach unten bis knapp über das Fahrerhaus 24 abgesenkt werden, so daß auch Punkte des Untergrundes, die vor dem Fahrerhaus 24 liegen, erreichbar sind.

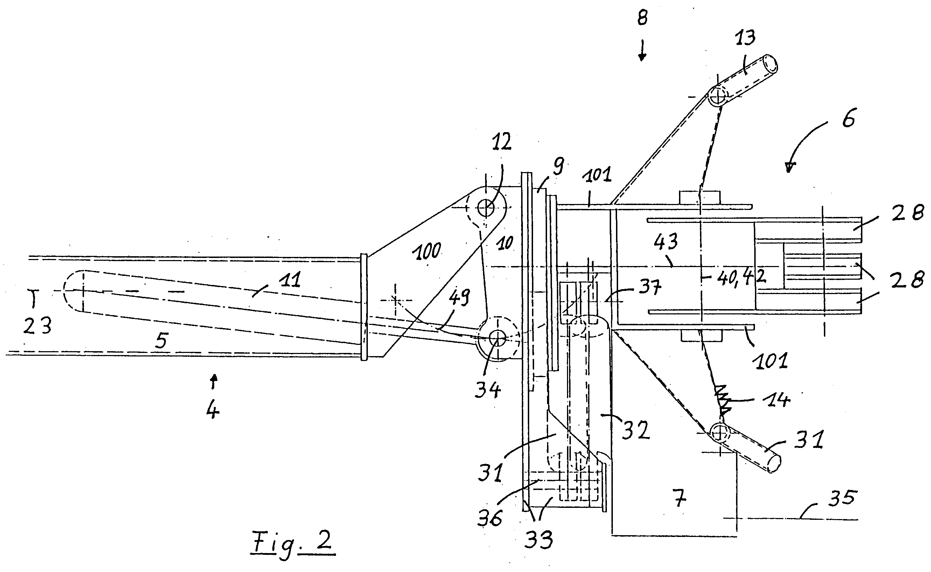

Fig. 2 zeigt - ebenfalls in einer Seitenansicht - in einer vergrößerten Darstellung die am vorderen Ende des vordersten Segmentes 5 des Auslegers 4 befestigte Arbeitseinheit 8. Diese besteht aus dem Klauengreifer 6 und der nicht im einzelnen dargestellten Kappsäge 7 sowie den Verbindungsteilen zum Ausleger 4.

An der freien Stirnseite des Vierkantrohres des Segmentes 5 ist eine Kragplatte 100 fest angeordnet, die sich nach vorne und seitlich über den Bereich des Segmentes 5 hinaus erstreckt. An dieser Kragplatte 100 ist ein Zwischenstück 10 um eine etwa waagerecht verlaufende Schwenkachse 12 herum drehbar befestigt.

Während sich die Schwenkachse 12 im oberen Bereich des Zwischenstückes 10 und oberhalb des Querschnittes des Segmentes 5 befindet, befindet sich in ihrem unteren Bereich der Anlenkpunkt 34 für den Hydraulikzylinder 11 bzw. dessen Kolben, wobei das andere Ende der Hydraulikeinheit am Segment 5 befestigt ist. Somit kann der Anlenkpunkt 34 entlang einer Bogenlinie 49, wodurch die in der Fig. 2 waagerecht stehenden Klauen 28 des Klauengreifers 6 in eine senkrechte Position gebracht werden können.

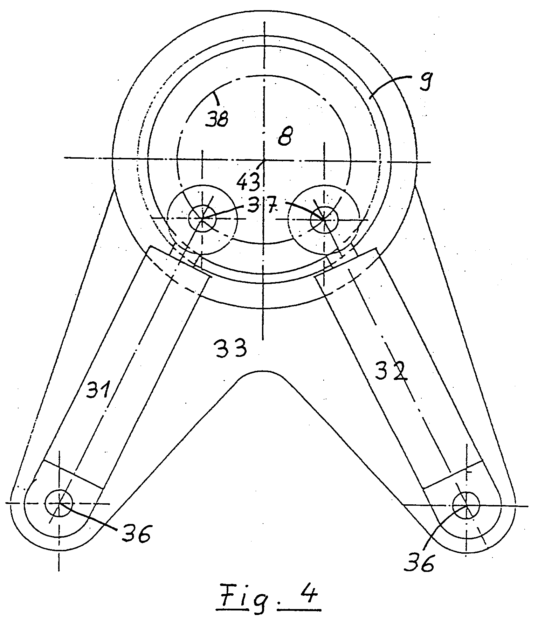

Am Zwischenpunkt 10 ist die Halteplatte 33 starr angebracht, die zusätzlich winklig abstrebende Bereiche aufweist. Die Halteplatte 33 erstreckt sich in der in Fig. 2 dargestellten waagerechten Lage der Arbeitseinheit 8 vorzugsweise senkrecht von der Längsachse 43 der Arbeitseinheit 8 nach unten, wie auch in Fig. 4 zu erkennen ist.

Auf der vom Ausleger 4 abgewandten Seite der Halteplatte 33 befindet sich der Zahndrehkranz 9, mittels welchem ein Verdrehen der Arbeitseinheit 8 gegenüber dem Zwischenstück 10 und der Halteplatte 33 um die Längsachse 43 der Arbeitseinheit herum möglich ist, welche in der in Fig. 2 dargestellten Lage in etwa parallel zur Längsachse 23 des Auslegers 4 liegt. Die Arbeitseinheit 8 besteht aus dem Klauengreifer 6, der drei Klauen 28 umfaßt, und der Kappsäge 7, die in der Fig. 2 nur mit ihrem umgebenen Gehäuse dargestellt ist. Die Schwenkebene der Kappsäge 7 ist als strichpunktierte Linie 35 eingezeichnet.

Ferner umfaßt die Arbeitseinheit 8 die schräg von der Längsachse 43 abstrebenden Fangstreben 13, zwischen welchen sich die Haltekante 27 erstreckt, welche mit angedeuteten Fangstacheln 14 besetzt ist. Mit dieser Haltekante drückt die Arbeitseinheit gegen den zu kappenden Baum oder Ast, wobei die in das Holze gedrückten Fangstacheln 14 ein Abrutschen verhindern. Zwischen der Arbeitseinheit 8 und der in der Aufsicht der Fig. 4 V-förmigen Halteplatte 33, die mit dem Zwischenstück 10 fest verbunden ist, sind zwei Hydraulikzylinder 31 und 32 jeweils mit einem Ende an der Arbeitseinheit 8 und mit dem anderen Ende an der Halteplatte 33 angelenkt. Die beiden Hydraulikeinheiten streben dabei radial in einem spitzen Winkel etwa auf die Längsachse 43 der Arbeitseinheit 8 zu. Deren äußeren Anlenkpunkte 36 befinden sich an den freien Enden der V-förmigen Halteplatte 33, während sich deren innen liegende Anlenkpunkte 37 an der Arbeitseinheit 8 befinden, so daß beim Aus- bzw. Einfahren der zusammenwirkenden Hydraulikzylinder 31, 32 eine Drehung der Arbeitseinheit 8 gegenüber der Halteplatte 33 mittels des an sich bekannten Drehzahnkranzes 9 ergibt, wobei sich die innen liegenden Anlenkpunkte 37 auf einer konzentrisch zur Längsachse 43 gegen die Kreisbahn 38 liegen. Dadurch ist eine Drehbewegung der Arbeitseinheit gegenüber der Halteplatte 33 um ca. plus-minus 105° möglich.

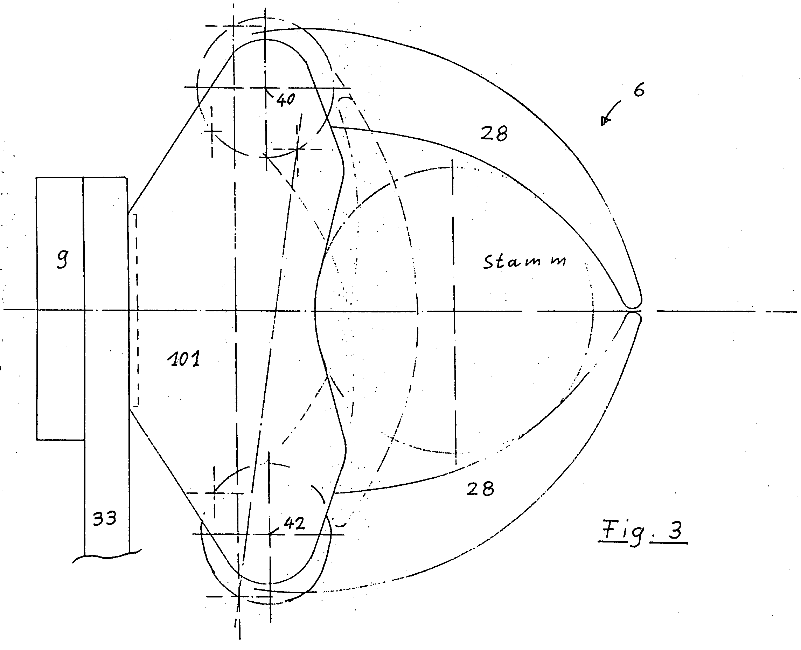

Fig. 3 zeigt ferner eine um 90° gedrehte Ansicht des Klauengreifers 6 der Fig. 2.

In Fig. 2 sind nur zwei der insgesamt drei sichelförmigen Klauen 28 sichtbar, da in dieser Ansicht die oberste und unterste der drei Klauen aus der Fig. 2 deckungsgleich liegen. Die Klauen sind dabei um zwei Achsen 40, 42 schwenkbar, welche zwischen den beiden parallel angeordneten Gehäuseplatten 101 befestigt sind. Diese Gehäuseplatten 101 sind an der Halteplatte 33 befestigt, welche auf dem Zahndrehkranz 9 sitzt.

Zwischen den Klauen 28 und den Gehäuseplatten 101 wird der in der Fig. 3 angedeutete Stamm gehalten.

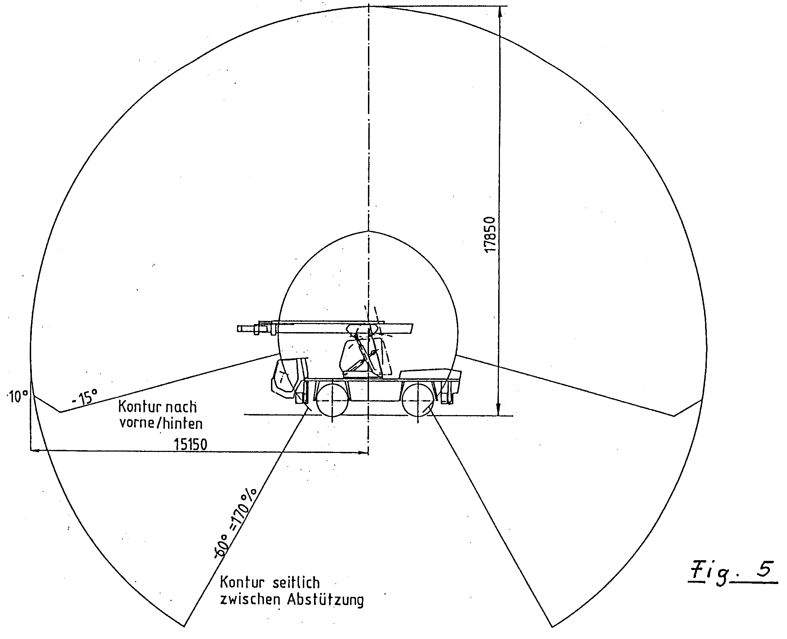

Dadurch ergeben sich für die am Ausleger 4 befestigte Arbeitseinheit 8 des Entasters die in der Fig. 5 dargestellten Bewegungsmöglichkeiten: Aus der waagerechten Ebene nach oben handelt es sich um einen halbkugelförmigen, erreichbaren Raum. Nach vorne und hinten über das Fahrerhaus 24 bzw. das hintere Ende des Chassis hinweg kann der Ausleger 4 bis zu einem Winkel von minus 15° unter die Waagerechte abgesenkt werden. Seitlich neben dem Chassis, und zwar zwischen den Stützen 22 des Chassis, kann der Ausleger 4 durch Verschwenken gegenüber der Kransäule 15 und deren Schrägstellung gegenüber dem Chassis 2 eine Neigung von bis zu minus 60° abweichend von der Waagerechten nach unten einnehmen, so daß auch Punkte an steilen Böschungen schräg unterhalb des LKW erreichbar sind. Die Größe dieses absoluten Arbeitsraumes hängt von den Abmessungen des Ausleger ab. Bei einem dreiteiligen AUsleger, der im zusammengezogenen Zustand ab seinem Schwenkpunkt etwa 5,5m mißt, ergibt sich ein Radius des Arbeitsbereiches von mehr als 15 m.

Daraus ergeben sich die genannten Vorteile, daß mit einer geringeren Anzahl und geringer qualifiziertem Personal gearbeitet werden kann, weniger Fahrzeuge insgesamt erforderlich sind und der gesamte Zeitaufwand und damit auch die gesamten anfallenden Kosten geringer werden. Zusätzlich wird die Sicherheit bei derartigen Arbeiten erhöht.

Je nach Gestaltung des Fahrgestells kann neben einer eventuell vorhandenen Fahrerkabine für das Fahrgestell an bzw. in der Kransäule eine separate Kabine vorhanden sein, aus der die Arbeitseinheit im Einsatz von einem Bediener gesteuert wird.

## Patentansprüche

1. Entaster mit einem Fahrgestell, auf dessen Chassis (2) ein Kran (3) aufgebaut ist, an dessen Ausleger (4), der als Teleskoparm mit ineinander passenden polygonen Querschnitt aufweisenden Segmenten ausgebildet ist, sich eine schwenkbare Arbeitseinheit (8) mit einem Klauengreifer (6) und einer parallel dazu bewegbaren Kappvorrichtung befindet, wobei die Verbindung zwischen der Arbeitseinheit (8) und dem Kran (3) sowie dem Kran (3) und dem Chassis (2) und die Arbeitseinheit (8) und der Kran (3) selbst so gestaltet sind, daß Drehmomente von der Arbeitseinheit (8) auf das Chassis (2) übertragen werden können,
**dadurch gekennzeichnet, daß**
die Kransäule (15) gegenüber dem Chassis (2) um eine senkrechte Achse (17) um wenigstens +/- 180° drehbar und um eine waagerechte Kippachse (21) um wenigstens +/- 10° kippbar ist.

2. Entaster nach Anspruch 1,
**daduch gekennzeichnet, daß**
die Drehbarkeit der Kransäule (15) gegenüber dem Chassis (2) durch einen zwischen dem Unterteil (19) der Kransäule (15) angeordneten Zahndrehkranz gelöst ist und das Kippen der Kransäule (15) gegenüber dem Chassis (2) durch das Kippen des Oberteils (20) der Kransäule (15) gegenüber dem Unterteil (19) um die Kippachse (21) mittels eines Hydraulikzylinders (25).

3. Entaster nach einem der vorhergehenden Ansprüche,
**dadurch gekennzeichnet, daß**
die Kransäule (15) einen großen Durchmesser von mehr als einem Meter an der Basis besitzt, jedoch eine geringe Höhe von weniger als 1,5m.

4. Entaster nach einem der vorhergehenden Ansprüche,
**dadurch gekennzeichnet, daß**
am freien Ende des am weitesten ausfahbaren Segmentes (5) des gelenklosen Teleskoparmes eine Arbeitseinheit (8) über zwei Achsen (12, 43) so befestigt ist, daß sie in allen Richtungen Drehmomente und Biegekräfte auf den Ausleger (4) übertragen werden kann.

5. Entaster nach einem der vorhergehenden Ansprüche,
**dadurch gekennzeichnet, daß**
die Verbindung zwischen der Arbeitseinheit (8) und dem freien Ende des äußersten Segmentes (5) des Auslegers (4) ein Zwischenstück (10) aufweist, welches gegenüber dem freien Ende des äußersten Segmentes (5) um eine quer zur Längsachse des Segmentes (5) liegende, etwa waagerechte Schwenkachse (12) mittels eines Hydraulikzylinders (11) schwenkbar ist und die Arbeitseinheit (8) gegenüber dem Zwischenstück (10) mittels eines kleinen Zahndrehkranzes (9) um eine Achse quer zur Schwenkachse (12), also in etwa parallel zur Längsachse (23) des Segmentes (5) gedreht werden kann.

6. Entaster nach eienm der vorhergehenden Ansprüche,
**dadurch gekennzeichnet, daß**
der Ausleger (4) gegenüber der Kransäule (15) in der neigung verschwenkbar ist.

7. Entaster nach einem der vorhergehenden Ansprüche,
**dadurch gekennzeichnet, daß**
der Ausleger (4) gegenüber der Kransäule (15) aus der Waagerechten um mindestens 15° nach unten und 80° nach oben verschwenkbar ist.

8. Entaster nach einem der vorhergehenden Ansprüche,
**dadurch gekennzeichnet, daß**
es sich bei dem Fahrgestell um ein selbstfahrendes LKW-Fahrgestell (1) handelt.

9. Entaster nach einem der vorhergehenden Ansprüche,
**dadurch gekennzeichnet, daß**
die Kappvorrichtung der Arbeitseinheit (8) eine parallel zum Greifer bewegbare Kappschere ist.

10. Entaster nach einem der vorhergehenden Ansprüche,
**dadurch gekennzeichnet, daß**
der Kran (3), die Arbeitseinheit (8) und das Chassis (2) derart gestaltet sind, daß von der Arbeitseinheit (8) auf das Chassis (2) Drehmomente in einer Größenordnug von mehr als einer Metertonne (mt) übertragen werden können.

## Claims

1. Delimber having an undercarriage, mounted on the chassis (2) of which is a crane (3) having a jib (4), which takes the form of a telescopic arm comprising nesting segments which are polygonal in cross-section and on which is situated a slewable operating unit (8) with a claw grab (6) and with a lopping device movable parallel thereto, the connection between the operating unit (8) and the crane (3) as well as between the crane (3) and the chassis (2) and the operating unit (8) and the crane (3) itself being fashioned in such a way that torques may be transmitted from the operating unit (8) to the chassis (2),
characterized in that
the crane pillar (15) is rotatable about a vertical axis (17) through at least +/- 180° and is tiltable about a horizontal tilting axis (21) through at least +/- 10° relative to the chassis (2).

2. Delimber according to claim 1,
characterized in that
the rotatability of the crane pillar (15) relative to the chassis (2) is solved by a toothed live ring disposed between the bottom part (19) of the crane pillar (15) and the tilting of the crane pillar (15) relative to the chassis (2) is solved by the tilting of the upper part (20) of the crane pillar (15) relative to the bottom part (19) about the tilting axis (21) by means of a hydraulic cylinder (25).

3. Delimber according to one of the preceding claims,
characterized in that
the crane pillar (15) has a large diameter of more than a metre at the base but has a low height of less than 1.5 m.

4. Delimber according to one of the preceding claims,
characterized in that
an operating unit (8) is fastened by two axes (12, 43) to the free end of the most extendable segment (5) of the hingeless telescopic arm in such a way that it may in all directions transmit torques and bending forces to the jib (4).

5. Delimber according to one of the preceding claims,
characterized in that
the connection between the operating unit (8) and the free end of the outermost segment (5) of the jib (4) comprises a transition piece (10) which may be swivelled relative to the free end of the outermost segment (5) by means of a hydraulic cylinder (11) about a substantially horizontal swivelling axis (12) lying at right angles to the longitudinal axis of the segment (5) and the operating unit (8) may be rotated relative to the transition piece (10) by means of a small toothed live ring (9) about an axis at right angles to the swivelling axis (12), i.e. approximately parallel to the longitudinal axis (23) of the segment (5).

6. Delimber according to one of the preceding claims,
characterized in that
the jib (4) is capable of swivelling in its inclination relative to the crane pillar (15).

7. Delimber according to one of the preceding claims,
characterized in that
the jib (4) is capable of swivelling relative to the crane pillar (15) through at least 15° downwards and 80° upwards from the horizontal.

8. Delimber according to one of the preceding claims,
characterized in that
the undercarriage is an automobile lorry undercarriage (1).

9. Delimber according to one of the preceding claims,
characterized in that
the lopping device of the operating unit (8) comprises lopping shears which are movable parallel to the grab.

10. Delimber according to one of the preceding claims,
characterized in that
the crane (3), the operating unit (8) and the chassis (2) are fashioned in such a way that torques in the order of magnitude of more than one metre-ton (mt) may be transmitted from the operating unit (8) to the chassis (2).

## Revendications

1. Ebrancheuse comportant un châssis sur le cadre (2) duquel est montée une grue (3) sur la flèche (4), constituée par un bras télescopique comprenant des segments de section polygonale ajustés les uns dans les autres, de laquelle se trouve une unité travaillante oscillante (8) comprenant elle-même un grappin à griffes (6) et un dispositif d'étêtage mobile parallèlement à ce grappin, la liaison entre l'unité travaillante (8) et la grue (3) et la liaison entre la grue (3) et le châssis (2), ainsi que l'unité travaillante (8) et la grue (3) elles-mêmes étant conformées de manière que des couples puissent être transmis de l'unité travaillante (8) au cadre (2),
caractérisée en ce que la colonne (15) de la grue peut pivoter par rapport au cadre (2) d'au moins +/- 180° autour d'un axe vertical (17) et basculer d'au moins +/- 10° autour d'un axe de basculement horizontal (21).

2. Ebrancheuse selon la revendication 1,
caractérisée
en ce que la possibilité de rotation de la colonne (15) de la grue par rapport au cadre (2) est assurée par une couronne dentée interposée entre la partie inférieure (19) de la colonne (15) de la grue et le basculement de la colonne (15) de la grue par rapport au cadre (2) par le basculement de la partie supérieure (20) de la colonne (15) de la grue par rapport à la partie inférieure (19) autour de l'axe de basculement (21) au moyen d'un vérin hydraulique (25).

3. Ebrancheuse selon une des revendications précédentes,
caractérisée
en ce que la colonne (15) de la grue possède un grand diamètre d'au moins un mètre à la base mais une faible hauteur de moins de 1,5 m.

4. Ebrancheuse selon une des revendications précédentes,
caractérisée
en ce qu'une unité travaillante (8) est fixée à l'extrémité libre du segment (5) du bras télescopique dépourvu d'articulation qui peut être mis le plus loin en extension par l'intermédiaire de deux axes (12, 43) de manière à pouvoir transmettre des couples et des forces de flexion à la flèche (4) dans toutes les directions.

5. Ebrancheuse selon une des revendications précédentes,
caractérisée
en ce que la liaison entre l'unité travaillante (8) et l'extrémité libre du segment extrême extérieur (5) de la flèche (4) comprend un élément intermédiaire (10) qu'on peut faire pivoter par rapport à l'extrémité libre du segment extérieur (5) autour d'un axe de pivotement (12) à peu près horizontal, s'étendant transversalement à l'axe longitudinal du segment (5) au moyen d'un vérin hydraulique (11) et on peut faire tourner l'unité travaillante (8) par rapport à l'élément intermédiaire (10) au moyen d'une petite couronne dentée (9) autour d'un axe transversal à l'axe de pivotement (12), c'est-à-dire à peu près parallèlement à l'axe longitudinal (23) du segment (5).

6. Ebrancheuse selon une des revendications précédentes,
caractérisée
en ce qu'on peut faire osciller la flèche (4) en inclinaison par rapport à la colonne (15) de la grue.

7. Ebrancheuse selon une des revendications précédentes,
caractérisée
en ce qu'on peut faire osciller la flèche (4) par rapport à la colonne (15) de la grue, d'au moins 15° vers le bas et 80° vers le haut à partir de l'horizontale.

8. Ebrancheuse selon une des revendications précédentes,
caractérisée
en ce que le châssis est un châssis de camion auto-moteur (1).

9. Ebrancheuse selon une des revendications précédentes,
caractérisée
en ce que le dispositif d'étêtage de l'unité travaillante (8) est une cisaille d'étêtage pouvant se déplacer parallèlement au grappin.

10. Ebrancheuse selon une des revendications précédentes,
caractérisée
en ce que la grue (3), l'unité travaillante (8) et le cadre (2) sont conformés de manière que des couples d'un ordre de grandeur de plus de 1 mètre-tonne (mt) peuvent être transmis de l'unité travaillante (8) au cadre (2).
